# EUROPEAN PATENT SPECIFICATION

(11) **EP 0 667 885 B1**
(45) Date of publication and mention of the grant of the patent: **16.07.1997**
(21) Application number: 94901070.6
(22) Date of filing: 08.11.1993
(51) Int. Cl.: C08L 67/04, C08G 63/08, C08G 63/64

(54) **RUBBER-MODIFIED POLYLACTIDE AND/OR GLYCOLIDE COMPOSITION**
MIT KAUTSCHUK MODIFIZIERTE POLYLACTID- UND/ODER GLYCOLIDZUSAMMENSETZUNG
COMPOSITION DE POLYLACTIDE ET/OU DE GLYCOLIDE MODIFIEE AU CAOUTCHOUC

(30) Priority: 06.11.1992 NL 9201949
(43) Date of publication of application: 23.08.1995
(73) Proprietor: Rijksuniversiteit te Groningen, 9712 CP Groningen (NL)
(72) Inventor: GRIJPMA, Dirk Wybe, NL-9712 CP Groningen (NL); JOZIASSE, Conrnelis Aarnoud Peter, NL-9712 CP Groningen (NL); NIJENHUIS, Atze Jan, NL-9712 CP Groningen (NL); PENNINGS, Albert Johannes, NL-9712 CP Groningen (NL)
(74) Representative: Smulders, Theodorus A.H.J., Ir.
(86) International application number: NL9300235
(87) International publication number: WO9411441

(56) References cited:
- EP-A- 0 427 185
- EP-A- 0 450 777
- EP-A- 0 460 439
- WO-A-90/01521
- MAKROMOLEKULARE CHEMIE, RAPID COMMUNICATIONS, vol.14, no.3, March 1993, BASEL CH pages 155 - 161 D. W. GRIJPMA ET AL. 'STAR-SHAPED POLYLACTIDE-CONTAINING BLOCK COPOLYMERS'
- POLYMER BULLETIN, vol.29, no.5, 12 November 1992, HEIDELBERG DE pages 571 - 578 D. W. GRIJPMA ET AL. 'HIGH IMPACT STRENGTH AS-POLYMERIZED PLLA'
- MACROMOLECULES, vol.17, no.12, December 1984, EASTON US pages 2764 - 2767 C. X. SONG ET AL. 'SYNTHESIS OF ABA TRIBLOCK COPOLYMERS OF E-CAPROLACTONE AND DL-LACTIDE'
- DATABASE WPI Week 9231, Derwent Publications Ltd., London, GB; AN 92-255657 & JP,A,4 173 746 (UNITIKA LTD.) 22 June 1992
- MAKROMOLEKULARE CHEMIE, RAPID COMMUNICATIONS, vol. 14, no. 3, March 1993, Basel (CH); pp. 155-161, D.W. GRIJPMA ET. AL. 'STAR-SHAPED POLYLACTIDE-CONTAINING BLOCK COPOLYMERS'
- POLYMER BULLETIN, vol. 29, no. 5, 12 November 1992, Heidelberg (DE); pp. 571-578, D.W. GRIJPMA ET AL. 'HIGH IMPACT STRENGTH AS-POLYMERIZED PLLA'
- MACROMOLECULES, vol. 17, no. 12, December 1984, EASTON US; pp. 2764-2767 C.X. SONG ET AL. 'SYNTHESIS OF ABA TRIBLOCK COPOLYMERS OF E-CAPROLACTONE AND DL-LACTIDE'

## Description

This invention relates to a rubber-reinforced polylactide and/or polyglycolide composition. Similar compositions are known from some recent publications. Polylactide compositions, i.e., synthetic materials based on a matrix of a polylactide, 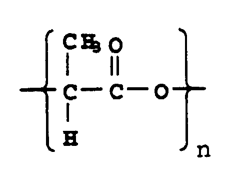 are known for their good degradability in the environment. For this reason, a great deal of research has already been conducted into the preparation and modification of such compositions, for instance for packaging purposes.

In view of the good biocompatibility of a number of lactide polymers, a great deal of research has also been conducted into the applicability of such materials in the biomedical field, such as systems for the controlled delivery of pharmaceuticals or as bioresorbable material.

An extensive overview of the state of the art in the field of polylactide compositions is given in the introduction of WO-A 92/04413, which publication is directed to packages of rapid biodegradation. This publication also mentions the possibility of modifying the lactide compositions with a rubber.

Rubber modification of lactide compositions is also described in WO-A 90/01521 of the same applicant as WO-A 92/04413.

In these publications, the starting materials are rubbers based on polyester or copolymers of ethene, propene and various vinyl monomers. Specific mention is made of the use of Hytrel™, a segmented polyester block copolymer of Dupont. The use of such rubbers for the modification of lactide compositions, it is true, leads to an improvement of the impact resistance, but this improvement is not spectacular. From the examples of WO-A 92/04413 it is already evident that with mixtures of different lactide polymers an improvement of substantially the same magnitude can be achieved. A major disadvantage of the rubber-modified lactide compositions described is that they are hardly biodegradable anymore, if at all, and the biocompatibility leaves to be desired as well. The use of such compositions in the biomedical field and in situations where biodegradability plays an important role is therefore not quite well possible.

The object of the present invention is primarily to provide a polylactide composition which is modified with rubber, which composition possesses clearly improved mechanical properties, such as toughness and elongation at break. A further object of the invention is to provide a polylactide composition which is controllably biodegradable and further possesses good biocompatibility.

Accordingly, the present invention relates to a rubber-modified composition, comprising a matrix and a separate rubber phase, the matrix being based on lactide and/or glycolide (co)polymers, comprising 5 to 30 wt.% based on the composition of a biodegradable rubber phase, present as a separate phase, with a glass transition temperature of at most 10°C, the elongation at break of the composition being at least 120%.

Surprisingly, it has been found that such compositions exhibit an excellent combination of properties and can also be suitably used as bioresorbable materials. The articles obtained from the compositions according to the invention combine good impact resistance with good biocompatibility, which renders the materials very suitable for use in the manufacture of various sorts of implants.

An essential aspect of the invention is the nature of the rubber which is used for the modification. Most broadly, it has been found that a rubber can be used which is biodegradable. By this is meant that the rubber phase decomposes in the body or in the environment. The decomposition involved here is preferably a decomposition into substantially non-toxic, water-soluble, preferably cell-metabolizable components.

The decomposition can take place under physiological conditions, under the influence of water, bacteria, enzymes and the like. Such decomposition can also take place in the environment, for instance in the ground. Further, it is advantageous if the rubber itself is also biocompatible.

Another important aspect of the rubber is that it must give to the composition an elogation at break of at least 120%. It has been found that if this requirement is satisfied, the composition possesses the advantageous properties which were mentioned in the foregoing. This requirement is more or less equivalent to the requirement that the rubber have a molecular weight of at least 30 000, more particularly at least 45 000. The upper limit of the elongation at break may be particularly high, it being noted, however, that too high an elongation at break (at 20°C) generally indicates that the composition threatens to lose the lactide properties and starts exhibiting a rubbery behavior.

According to the invention, both mixtures of rubber and matrix polymer and a rubber phase and matrix polymer chemically bound to each other can be used. The chemically bound rubber phase and matrix polymer is preferred. It is noted that when blends are used, to obtain the desired elongation at break, the molecular weight of the rubber must generally be higher than in the case where systems are used in which the rubber phase is chemically bonded to the matrix.

According to the invention, the modification of the lactide matrix with a rubber phase can be carried out in various ways. The rubber can be a homopolymer, a copolymer, or a block copolymer which may or may not be segmented. The monomers from which the rubber phase is made up are chosen from cyclic esters and cyclic carbonates such as ε-caprolactone and trimethylene carbonate. Other comonomers can be used as well, one requirement applying to all monomers being that the glass transition temperature must satisfy the requisite value.

When a segmented block copolymer based on hard and rubbery segments is used, it appears that the material possesses two clearly distinguishable glass transition temperatures. Generally, the rubbery blocks will be present as a separate phase, whilst the hard blocks function as a kind of physical bonding sites for the matrix. In that case, the nature of the hard blocks should satisfy the requirements of the matrix with regard to composition. It is noted that, according to the invention, preferably two, and not more than two, phases are present in the composition. The three-phase systems disclosed in US-A 4,719,246 are not encompassed by the present invention, since the combination of stereocomplexing of the lactide matrix described therein presents problems with regard to the melting temperature. As appears from the examples of the patent application mentioned, the compositions described therein moreover possess a very low elongation at break, which is an indication of the fact that the properties of the material are not particularly good.

According to a preferred embodiment of the invention, as rubber, a block or star copolymer is used. These polymers are preferably chemically bound to the matrix. This can for instance be suitably realized by preparing, in a first step, the rubber phase from cyclic esters and/or carbonates starting from a polyol as initiator. After completion of the rubber polymerization, an OH-functional rubber is obtained, to which rubber the matrix can be fixedly polymerized. Utilizing this method, a chemical bond is obtained between the matrix phase and the rubber phase in a way giving rise to a particular combination of properties. Each molecule then consists of a rubber core with a number of matrix molecules coupled thereto. These molecules could be represented by the formula (B(Aₙ)), wherein B represents the rubber part and A the matrix polymer. n designates the functionality of the rubber and has a value of at least 2. The upper limit is not very critical and can be 10 or more.

The rubbers used are preferably homo and copolymers of cyclic esters which are obtained by ring-opening polymerization. Suitable rubbers are based on trimethylene carbonate, ε-caprolactone, δ-valerolactone, other cyclic lactones and cyclic carbonates, copolymers thereof and copolymers of such monomers with other suitable monomers, such as D- or L-lactide and glycolide. As initiator for the rubber polymerization, preferably a polyol with two or more hydroxyl groups, or a polyamine is used. Generally, compounds with active hydrogen atoms are suitable. Suitable polyols include 1,6-hexanediol, glycerol, trimethylolpropane, pentaerythritol, myo-inositol and the like.

Such rubbers are amorphous or have a melting temperature below the body temperature These rubbers are all incompatible with the polylactide/glycolide matrix, so that phase separation takes place. This is a condition for the realization of an increased impact resistance by rubber modification. The amount of rubber to be used is mainly determined by the desired properties. The lower limit is 5 wt.%, since too little improvement of the properties is obtained at lower contents.

A preferred lower limit for the rubber content is 7.5 wt.%, since in this range an optimum improvement is achieved while the polylactide properties of the matrix are maintained. The upper limit of the rubber content is 30 wt.%.

The preparation of the rubber should be effected in such a manner that the requirement with respect to the elongation at break of the final composition is satisfied. This requirement means that the rubber should have a comparatively high molecular weight (Mₙ determined via GPC with polystyrene standard). The preparation of rubbers with a high molecular weight can be effected in the manner known for that purpose, for instance by the use of a catalyst or by choosing the appropiate reaction conditions, such as initiator concentration and reaction time/temperature.

The poly(lactide) matrix to be modified can be a homopolymer of L-lactide, (poly(L-lactide), or a stereo copolymer of L- and D-lactide, (poly(D,L-lactide)). The L/D ratio determines whether the poly(lactide) is crystalline or amorphous. Copolymers of L/D-lactide with more than 15% D-lactide are amorphous and non-crystallizable. Normally speaking, after compression molding, poly(L-lactide) is semicrystalline but through rapid cooling (quenching) from above the melting temperature the glass condition can be frozen up, so that the polymer does not crystallize and is amorphous. However, in the course of time or during degradation, possibly this material may still crystallize. Copolymers with less than 15% D-lactide are substantially amorphous after compression molding, but also crystallizable.

For use in biomedical applications, non-crystallizable polymers are preferred, since the crystalline residual products possibly give rise to inflammatory reactions in the body during degradation. The major disadvantage of these amorphous poly(lactides) is the much lower impact resistance compared with the higher crystalline materials. Rubber modification with degradable rubbers is a way of increasing impact resistance. Increasing the toughness and the impact resistance of these poly(lactides) according to the invention can be realized by the synthesis of star-shaped block copolymers of lactide (L- or L/D-lactide) and rubber monomers, as well as by making blends (physical mixtures) of poly(lactide) (L- or L/D-copolymers) and rubber polymers.

The preparation of the lactide and/or glycolide matrix polymers can be effected in known manner, for instance as described in WO-A-9 116 368 or EP-A-0 108,635. In contrast with the disclosure of EP-A-0 499,204, according to the present invention, no fiber material is used as starting material, but the composition is prepared from monomers by polymerization thereof. It is further noted that the polymerization of the rubber can also be effected in the manner as described in the first-mentioned patent publications. In that case, however, no star polymers but linear polymers are obtained.

The toughness of polymers is an important property, since it represents the amount of energy the material can absorb before break occurs. A measure of the toughness is the area under a force-elongation curve obtained when the tensile strength of a material is measured. In this connection, a high elongation at break is essential to a high toughness. Another method is to measure the impact resistance of a material, by striking a test rod with a hammer until break occurs. The energy absorbed during the breaking process divided by the original surface area is the impact resistance. Compared with the force-elongation experiment, the speed of an impact test is considerably higher, so that these values rarely correspond. Impact resistance measurements are performed in accordance with different test standards. Most comnomly used is the Izod-notched test (ASTM D-256), whereby the impact resistance is measured on test rods of a depth of 12.7 mm. The unit in which the impact resistance is then expressed is ftlb/inch per inch of notch, or, in SI units, J/m per inch of notch. Because the depth of the rod is constant it can be converted to an energy per unit area J/m2.

Measurements on the rubber-modified materials in accordance with this standard enable a comparison with much used commercially available plastics. Our impact resistance measurements were typically carried out in accordance with DIN 53453 (Dynstat unnotched), the advantage of this method being that only small test pieces are necessary. The impact strength is expressed in J/m². In several cases, measurements were performed in accordance with both standards. The impact strength measured on a notched test piece is always lower than that measured on an unnotched test piece. Our measurements on crystalline and amorphous compression molded poly(lactide) clearly show the influence of crystallinity on impact resistance. Amorphous poly(lactide), whether quenched poly(L-lactide)) or a copolymer of 85/15 20 L/D-Lactide, is significantly less impact resistant than crystalline poly(L-lactide).

Both the amorphous non-crystallizable and the crystalline poly(lactides) can be rendered considerably tougher by the rubber modification according to the invention.

ABA block copolymers of 95/5 L/D-lactide with various rubbers possess a much higher impact resistance than the non-modified material (20% rubber even gives no break anymore in the Dynstat impact resistance test). The much higher elongations at break (some hundreds of percents) also show that these materials are particularly tough. A poly(95/5 L/D-lactide) star-block copolymer with a degradable rubber has a particularly high elongation at break and shows no break in the Dynstat impact resistance test. Copolymers of L- and D-lactide can be rendered impact resistant by physically mixing the poly(lactide) with an L-lactide/ε-caprolactone rubber. The impact resistance increases with increasing rubber content and is higher for the copolymers with little or no D-lactide. Amorphous 85/15 L/D lactide copolymers can be rendered impact resistant. Both star-block copolymers and ABA block copolymers and blends with various rubbers or ABA block copolymers yield tough materials which no longer break in the Dynstat impact test at a rubber percentage of approximately 20%. It is remarkable in the comparison of materials modified with equal amounts of the same rubber that the elongation at break of blends is lower than that in block copolymers or star-block copolymers, which points to an important role of the extent of bonding between the rubber part and the lactide matrix. This is the case both for crystalline 95/5 and amorphous 85/15 L/D-lactide modified polymers.

The materials according to the invention can be used in all kinds of fields. These uses lie especially in the field where the biological and/or degradation properties are important. Examples of uses include those in the field of packaging materials and in the biomedical field. The materials can be processed into sheets, fibers, articles, hoses, disposables, and the like. The conventional additives can be incorporated in them and processing takes place in the manner known for such polymers.

Possible uses for the materials according to the invention in the biomedical field include their use as drug-release means, nerve conductors, artificial veins, wound covering, artificial skin, sutures, surgical membranes, orthopedic implants and the like.

The invention will now be elucidated in and by a number of examples, without being limited thereto.

### EXAMPLES

While employing a number of different starting materials and reaction conditions, a number of rubber-modified synthetic materials were prepared.

Unless otherwise stated, the various materials were polymerized in the following manner.
I. Lactide was polymerized by adding an amount of 10⁻² mol.% catalyst (Sn-octoate: I^{a}, tin(II)-bis (2,4-pentanedionato-O-O': I^{b}) to a melt of the relevant lactide or mixture with lactide at 110°C and polymerizing at this temperature until the polymerization was completed or substantially completed. This method was also followed for the homopolymerization of trimethylene carbonate and ε-caprolactone.
II. Block and star-shaped copolymers were obtained by adding a polyol to a melt of a relevant monomer and polymerizing for 12 to 96 hours at 110 to 150°C. Following this polymerization, a melt of the matrix monomers was subsequently added to the rubber formed, where upon polymerization was continued.

The results of the various tests are included in the following Table. In Examples 1-3, a star-rubber based on pentaerithrytol was used, whilst Example 5 is based on an ABA rubber block mixed with the matrix material.

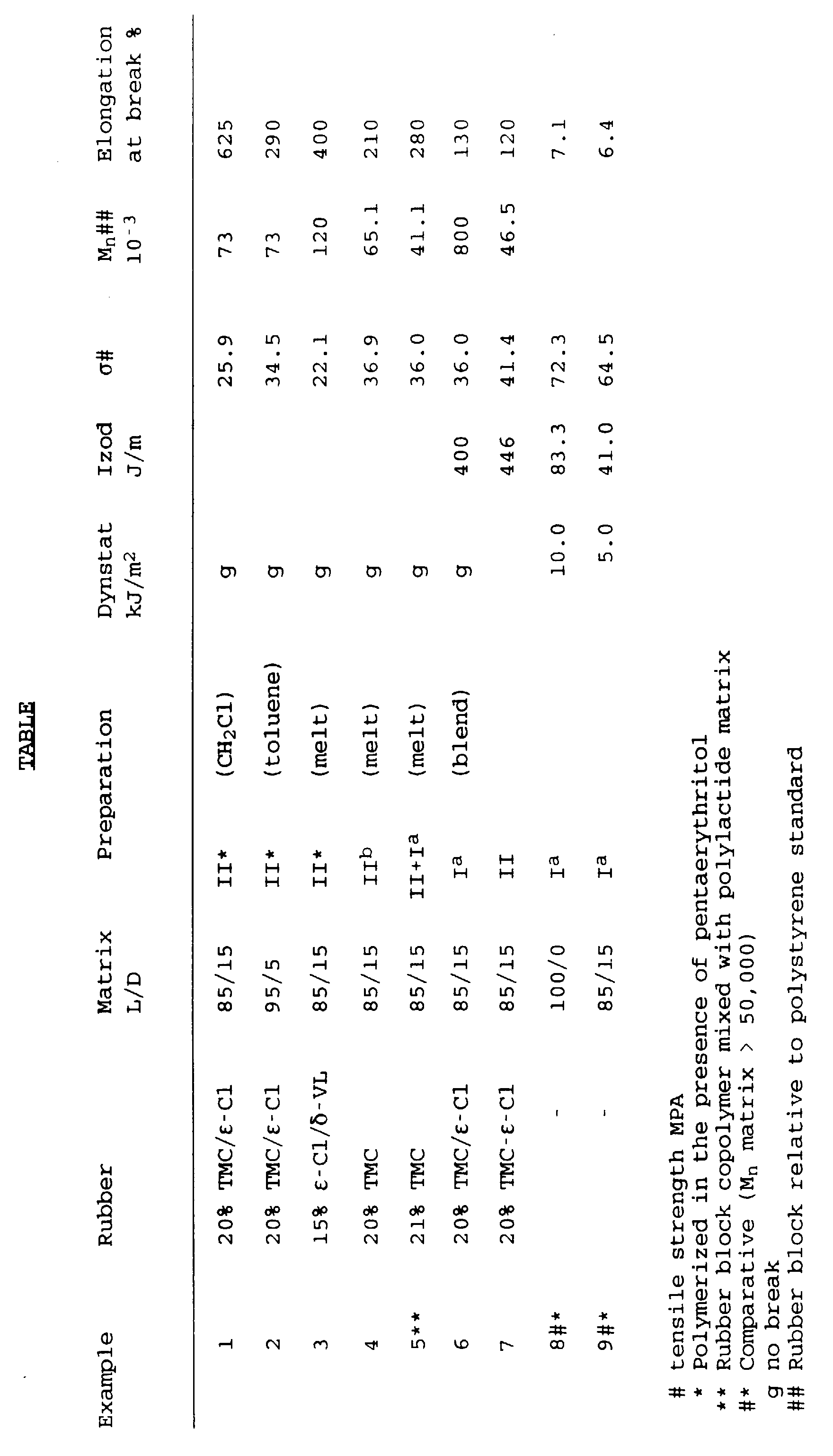

## Claims

1. A rubber-modified composition based on a matrix and a separate rubber phase, the matrix being based on lactide and/or glycolide (co)polymers, comprising 5 to 30 wt.% based on the composition of a biodegradable rubber phase, present as separate phase, with a glass transition temperature of at most 10°C, an amorphous structure or, if not amorphous, a melting temperature below body temperature, the elongation at break being at least 120%.

2. A composition according to claim 1, wherein the rubber is based on trimethylene carbonate.

3. A composition according to claim 1 or 2, wherein the rubber is based on ε-caprolactone.

4. A composition according to claims 1-3, wherein the rubber is selected from the group consisting of poly(trimethylene) carbonate, copolymers of L-lactide and ε-caprolactone, glycolide and ε-caprolactone, trimethylene carbonate and ε-caprolactone, δ-valerolactone and ε-caprolactone, as well as rubbers based on a polyol and one or more of the above-mentioned components.

5. A composition according to claims 1-4, wherein the lacride matrix has been obtained by polymerization in the presence of a star or block rubber.

6. A composition according to claims 1-4, wherein the polylactide matrix and biodegradable rubber are mixed with each other.

7. A composition according to claims 1-6, wherein the polylactide matrix consists of poly(L-lactide).

8. A composition according to claims 1-6, wherein the polylactide matrix is substantially amorphous and consists of a copolymer of L- and D-lactide with at least 15% D-lactide.

9. A composition according to claims 1-6, wherein the polylactide matrix is substantially amorphous but crystallizable and is based on a copolymer of D-lactide and L-lactide with less than 15% D-lactide.

10. Use of the composition according to claims 1-9 for medical applications.

11. Articles manufactured in whole or in part from the composition according to claims 1-9.

12. A method of preparing a composition according to claims 1-9, comprising polymerizing one or more rubber forming monomers in the presence of a compound comprising at least one active hydrogen, so as to form a functional rubber, followed by adding the matrix monomers to the functional rubber and polymerizing same in the presence of said rubber.

13. A method according to claim 12, wherein a polyol is used as compound comprising at least one active hydrogen.

## Patentansprüche

1. Mit Kautschuk modifizierte Zusammensetzung auf Basis einer Matrix und einer separaten Kautschukphase, wobei die Matrix auf Lactid- und/oder Glycolid-(Co)polymeren basiert, umfassend 5 bis 30 Gew.-% auf Basis der Zusammensetzung einer biologisch abbaubaren, als separate Phase vorliegenden Kautschukphase mit einer Glasübergangstemperatur von höchstens 10°C, einer amorphen Struktur oder, falls diese nicht amorph ist, einer Schmelztemperatur unterhalb der Körpertemperatur, wobei die Bruchdehnung mindestens 120 % beträgt.

2. Zusammensetzung gemäß Anspruch 1, worin der Kautschuk auf Trimethylencarbonat basiert.

3. Zusammensetzung gemäß Anspruch 1 oder 2, worin der Kautschuk auf ε-Caprolacton basiert.

4. Zusammensetzung gemäß den Ansprüchen 1 bis 3, worin der Kautschuk ausgewählt wird aus der Gruppe, bestehend aus Poly(trimethylen)carbonat, Copolymeren des L-Lactids und ε-Caprolactons, Glycolids und ε-Caprolactons, Trimethylencarbonats und ε-Caprolactons, δ-valerolactons und ε-Caprolactons sowie Kautschuk(materialien) auf der Basis eines Polyols und einem oder mehreren der zuvor erwähnten Bestandteile.

5. Zusammensetzung gemäß den Ansprüchen 1 bis 4, worin die Lactid-Matrix durch Polymerisation in Gegenwart eines Stern- oder Block-Kautschuks erhalten wurde.

6. Zusammensetzung gemäß den Ansprüchen 1 bis 4, worin die Polylactid-Matrix und der biologisch abbaubare Kautschuk miteinander gemischt werden.

7. Zusammensetzung gemäß den Ansprüchen 1 bis 6, worin die Polylactid-Matrix aus Poly(L-lactid) besteht.

8. Zusammensetzung gemäß den Ansprüchen 1 bis 6, worin die polylactid-Matrix im wesentlichen amorph ist und aus einem Copolymer des L- und D.Lactids mit mindestens 15 % D-Lactid besteht.

9. Zusammensetzung gemäß den Ansprüchen 1 bis 6, worin die Polylactid-Matrix im wesentlichen amorph, aber kristallisierbar ist und auf einem Copolymer aus D-Lactid und L-Lactid mit weniger als 15 % D-lactid basiert.

10. Verwendung der Zusammensetzung gemäß den Ansprüchen 1 bis 9 für medizinische Anwendungen.

11. Gegenstände, als ganzes oder teilweise aus der Zusammensetzung gemäß den Ansprüchen 1 bis 9 geformt.

12. Verfahren zur Herstellung einer Zusammensetzung gemäß den Ansprüchen 1 bis 9, umfassend das Polymerisieren von einem oder mehreren kautschukbildenden Monomeren in Gegenwart einer Verbindung, die mindestens einen aktiven Wasserstoff umfaßt, um einen funktionellen Kautschuk zu bilden, gefolgt von der Zugabe der Matrix-Monomere zu dem funktionellen Kautschuk und Polymerisieren derselben in Gegenwart des besagten Kautschuks.

13. Verfahren gemäß Anspruch 12, worin ein Polyol als Verbindung verwendet wird, die mindestens einen aktiven Wasserstoff umfaßt.

## Revendications

1. Composition modifiée au caoutchouc à base d'une matrice et d'une phase caoutchouc séparée, la matrice étant constituée de (co)polymères lactides et/ou glycolides, comprenant 5 à 30 % en poids par rapport à la composition d'une phase caoutchouc biodégradable, présente en tant que phase séparée, avec une température de transition vitreuse au plus de 10°C, une structure amorphe ou, si elle n'est pas amorphe, une température de fusion inférieure à la température du corps, l'allongement à la rupture étant au moins 120 %.

2. Composition selon la revendication 1, où le caoutchouc est à base de carbonate de triméthylène.

3. Composition selon la revendication ou 2, où le caoutchouc est à base d'ε-caprolactone.

4. Composition selon les revendications 1-3, où on choisit le caoutchouc dans le groupe constitué de poly(carbonate de triméthylène), des copolymères de L-lactide et ε-caprolactone, glycolide et ε-caprolactone, carbonate de triméthylène et ε-caprolactone, δ-valérolactone et ε-caprolactone, ainsi que les caoutchoucs à base d'un polyol et d'un ou plusieurs des composants mentionnés ci-dessus.

5. Composition selon les revendications 1-4, où la matrice lactide a été obtenue par polymérisation en présence d'un caoutchouc étoile ou séquencé.

6. Composition selon les revendications 1-4, où la matrice polylactide et le caoutchouc biodégradable sont mélangés ensemble.

7. Composition selon les revendications 1-6, où la matrice polylactide est constituée de poly(L-lactide).

8. Composition selon les revendications 1-6, où la matrice polylactide est sensiblement amorphe et est constituée d'un copolymère de L- et D-lactide avec au moins 15 % de D-lactide.

9. Composition selon les revendications 1-6, où la matrice polylactide est sensiblement amorphe mais est cristallisable et est à base d'un copolymère de D-lactide et L-lactide avec moins de 15 % de D-lactide.

10. Utilisation de composition selon les revendications 1-9 pour des applications médicales.

11. Articles produits en totalité ou en partie à l'aide de la composition selon les revendications 1-9.

12. Procédé de préparation d'une composition selon les revendications 1-9, comprenant de polymériser un ou plusieurs monomères formant un caoutchouc en présence d'un composé comprenant au moins un hydrogène actif, de façon à former un caoutchouc fonctionnel, suivi de l'addition de monomères de matrice au caoutchouc fonctionnel et polymériser ceux-ci en présence dudit caoutchouc.

13. Procédé selon la revendication 12, où on utilise un polyol comme composé comprenant au moins un hydrogène actif.
